# EUROPEAN PATENT APPLICATION

(11) **EP 4 597 232 A1**
(43) Date of publication of application: **06.08.2025**
(21) Application number: 23875214.1
(22) Date of filing: 04.10.2023
(51) Int. Cl.: G04B 37/14, A44C 5/14, G04G 17/08, G04G 99/00, G06F 1/16

(54) **WEARING MEMBER AND WEARABLE ELECTRONIC DEVICE COMPRISING SAME**

(30) Priority: 04.10.2022 KR 20220126324; 18.10.2022 KR 20220134318
(71) Applicant: Samsung Electronics Co., Ltd., Suwon-si, Gyeonggi-do 16677 (KR)
(72) Inventor: LEE, Juan, Suwon-si Gyeonggi-do 16677 (KR); CHUNG, Insik, Suwon-si Gyeonggi-do 16677 (KR)
(74) Representative: Gulde & Partner
(86) International application number: PCT/KR2023/015254
(87) International publication number: WO 2024/076151

(57) **Abstract**

A wearable electronic device according to one embodiment disclosed in the present document may comprise a housing and a wearing member. The housing may comprise a seating area that is concavely formed on at least one side thereof. The wearing member may comprise a link assembly and a strap assembly that are detachably mounted in the seating area. The strap assembly may be separably connected to the link assembly. The strap assembly may comprise a strap including a cover member and a strap extension portion surrounding at least a portion of the cover member. The cover member may comprise a slide groove formed through the cover member in one axial direction. The slide groove may be formed to allow the link assembly to slide in the one axial direction and be detachably seated. At least a portion of the strap extension portion may be disposed between the seating area and the link assembly.

## Description

### [Technical Field]

Embodiments disclosed herein relate to a detachable wearing member and a wearable electronic device including the same.

### [Background Art]

The term "wearable electronic device" may refer to a device that performs a specific function based on an installed program, such as a home appliance, an electronic scheduler, a portable multimedia player, a mobile communication terminal, a tablet PC, a video/audio device, a desktop/laptop PC, and/or a vehicle navigation system. As the integration level of wearable electronic devices increases and ultra-high-speed, large-capacity wireless communications become widespread, various functions may be incorporated into a single compact wearable electronic device, such as a mobile communication terminal. For example, not only communication functions but also entertainment functions such as gaming, multimedia functions such as music and video playback, communication and security functions for mobile banking, or functions of schedule management or electronic wallet are being integrated into a single wearable electronic device.

Recently, wearable electronic devices, which are wearable on a body, have been commercialized, and mobile communication terminals and wearable electronic devices are being used daily. Since a wearable electronic device may be maintained for a considerable amount of time in the state of being in contact with a user's body, the electronic device may be useful for medical or health care. In general, wearable electronic devices have a bar shape, box shape, or flat plate shape, but wearable electronic devices may have a number of segments capable of being combined to correspond to the curvature of the user's body and in consideration of convenience of wearing. For example, a wrist-worn wearable electronic device may include a housing that accommodates various circuit devices and serves as a main body, and at least one wearing member.

The above-described information may be provided as background technology for the purpose of aiding in the understanding of the disclosure herein. No claim or determination is made as to whether any of the foregoing may be applied as a prior art in connection with the disclosure.

### [Detailed Description of the Invention]

### [Technical Solution]

According to an embodiment of the disclosure, a wearable electronic device may include a housing and a wearing member. The housing may have a concave seating area on at least one side of the housing. The wearing member may include a link assembly and a strap assembly, which are detachably mounted in the seating area. The strap assembly may be detachably connected to the link assembly. The strap assembly may include a cover member and a strap including a strap extension that wraps at least a portion of the cover member. The cover member may include a slide groove formed through the cover member in an axial direction. The slide groove may be formed to allow the link assembly to be detachably on the slide groove by sliding in the axial direction. At least a portion of the strap extension may be disposed between the seating area and the link assembly.

### [Brief Description of Drawings]

Other aspects, configurations, and/or advantages according to the various embodiments described above or disclosed herein may become more apparent from the detailed description set forth below taken in conjunction with the accompanying drawings.
FIG. 1 is a front perspective view illustrating a wearable electronic device according to various embodiments disclosed herein.
FIG. 2 is a rear perspective view illustrating the wearable electronic device of FIG. 1.
FIG. 3 is an exploded perspective view illustrating the wearable electronic device of FIG. 1.
FIG. 4 is a perspective view illustrating a portion of a wearable electronic device according to an embodiment disclosed herein.
FIG. 5 is a perspective view of a wearing member according to an embodiment disclosed herein.
FIG. 6 is a side view of a wearing member according to an embodiment disclosed herein.
FIG. 7 is a perspective view of a link assembly and a cover member according to an embodiment disclosed herein.
FIG. 8 is a perspective view illustrating a strap assembly according to an embodiment disclosed herein separated into a strap and a cover member.
FIG. 9 is a perspective view illustrating the appearance of the wearing member according to an embodiment disclosed herein in a first state.
FIG. 10 is a view of the link assembly of the wearing member of FIG. 9.
FIG. 11 is a perspective view illustrating the appearance of the wearing member according to an embodiment disclosed herein in a second state.
FIG. 12 is a view of the link assembly of the wearing member of FIG. 11.
FIG. 13 is a perspective view of a wearing member according to an embodiment disclosed herein.
FIG. 14 is a perspective view of a wearing member according to an embodiment disclosed herein.

Throughout the appended drawings, like reference numerals may be assigned to like components, configurations, and/or structures.

### [Mode for Carrying out the Invention]

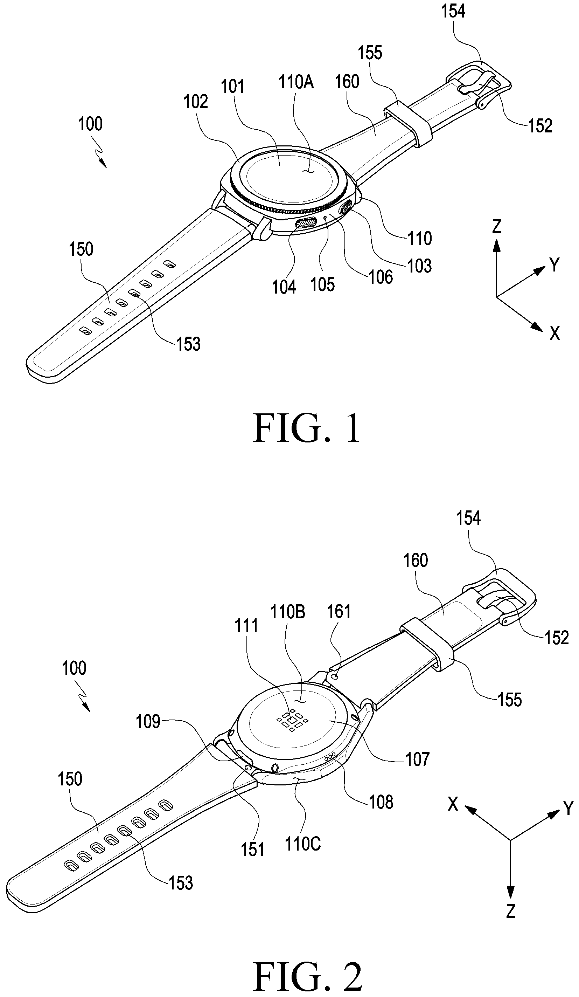

FIG. 1 is a front perspective illustrating a wearable electronic device 100 according to various embodiments disclosed herein. FIG. 2 is a rear perspective view illustrating the wearable electronic device 100 of FIG. 1.

In the detailed description below, in the Cartesian coordinate system of FIGS. 1 to 3, the "X-axis direction" may refer to the width direction of the wearable electronic device 100 or the housing 110, the "Y-axis direction" may refer to the length direction of the wearable electronic device 100 or the housing 110, and the "Z-axis direction" may refer to the thickness direction of the wearable electronic device 100 or the housing 110. In an embodiment, the direction in which the front surface (e.g., the first surface 120A in FIG. 1) of the wearable electronic device 100 or the housing 110 is oriented may be defined as a "first direction" or the "+Z direction", while the direction in which the rear surface (e.g., the second surface 120B in FIG. 2) of the wearable electronic device 100 or the housing 110 is oriented may be defined as a "second direction" or the "-Z direction".

FIG. 1 is a front perspective illustrating a wearable electronic device 100 according to various embodiments disclosed herein. FIG. 2 is a rear perspective view illustrating the wearable electronic device 100 of FIG. 1.

In the detailed description below, in the Cartesian coordinate system of FIGS. 1 to 3, the "X-axis direction" may refer to the width direction of the wearable electronic device 100 or the housing 110, the "Y-axis direction" may refer to the length direction of the wearable electronic device 100 or the housing 110, and the "Z-axis direction" may refer to the thickness direction of the wearable electronic device 100 or the housing 110. In an embodiment, the direction in which the front surface (e.g., the first surface 110A in FIG. 1) of the wearable electronic device 100 or the housing 110 is oriented may be defined as a "first direction" or the "+Z direction", while the direction in which the rear surface (e.g., the second surface 110B in FIG. 2) of the wearable electronic device 100 or the housing 110 is oriented may be defined as a "second direction" or the "-Z direction".

Referring to FIGS. 1 and 2, the wearable electronic device 100 according to an embodiment may include a housing 100 including a first surface (or a front surface) 110A, a second surface (or a rear surface) 110B, and a side surface 110C surrounding the space between the first surface 110A and the second surface 110B, and wearing members 150 and 160 each connected to at least a portion of the housing 110 and configured to detachably bind the wearable electronic device 100 on a portion of a user's body (e.g., a wrist or an ankle). For example, the wearable electronic device 100 may take the form of a wristwatch. In another embodiment (not illustrated), the housing may refer to a structure defining some of the first surface 110A of FIG. 1, the second surface 110B, and the side surface 110C of FIG. 2. According to an embodiment, at least a portion of the first surface 110A may be made of a substantially transparent front surface plate 101 (e.g., a glass plate or a polymer plate including various coating layers). The second surface 110B may be made of a substantially opaque rear surface plate 107. In an embodiment, when the wearable electronic device includes a sensor module 111 disposed on the second surface 110B, the rear surface plate 107 may include an at least partially transparent area. The rear surface plate 107 may be made of, for example, coated or colored glass, ceramic, polymer, metal (e.g., aluminum, stainless steel (STS), or magnesium), or a combination of two or more of these materials. The side surface 110C may be defined by a side surface bezel structure (or a "side surface member") 106 coupled to the front surface plate 101 and the rear surface plate 107 and including metal and/or polymer. In some embodiments, the rear surface plate 107 and the side surface bezel structure 106 may be integrally configured and may include the same material (e.g., a metal material such as aluminum). The wearing members 150 and 160 may be formed of various materials and in various shapes. Multiple integrated unit links may be disposed to be movable with respect to each other by using a woven material, leather, rubber, urethane, metal, ceramic, or a combination of two or more of these materials.

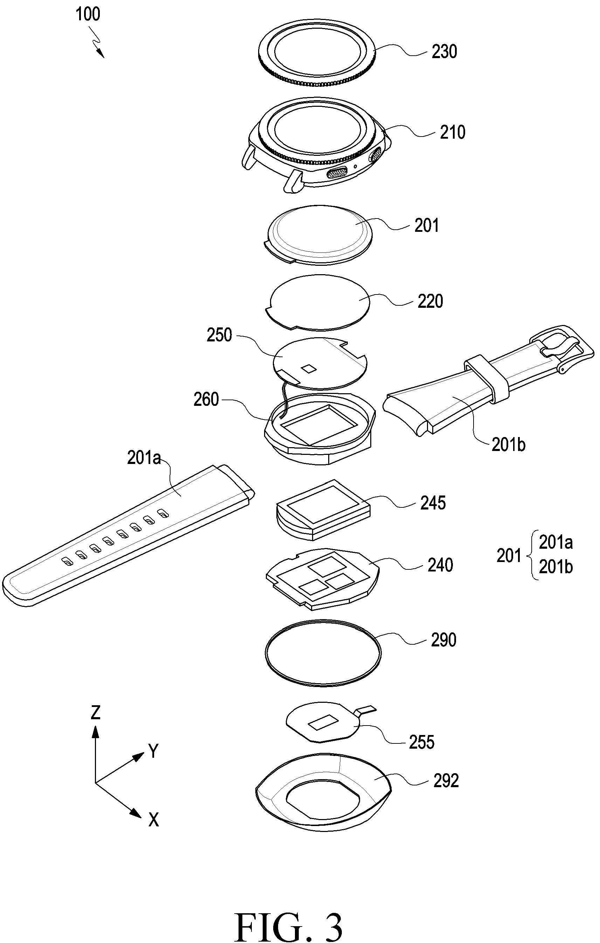

According to an embodiment, the wearable electronic device 100 may include at least one of a display 220 (see FIG. 3), audio modules 105 and 108, a sensor module 111, key input devices 102, 103, and 104, and a connector hole 109. In some embodiments, in the wearable electronic device 100, at least one of the components (e.g., the key input devices 102, 103, and 104, the connector hole 109, or the sensor module 111) may be omitted, or other components may be additionally included.

The display (e.g., the display 220 in FIG. 3) may be exposed, for example, through a substantial portion of the front surface plate 101. The display 220 may have a shape corresponding to the shape of the front surface plate 101, and may have various shapes such as a circle, an ellipse, and a polygon. The display 220 may be coupled to or disposed adjacent to a touch detection circuit, a pressure sensor capable of measuring touch intensity (pressure), and/or a fingerprint sensor.

The audio modules 105 and 108 may include a microphone hole 105 and a speaker hole 108. A microphone configured to acquire external sound may be disposed inside the microphone hole 105. For example, multiple microphones may be disposed inside the microphone hole 105 to detect the direction of sound. The speaker hole 108 may be used for an external speaker and a call receiver. For example, a speaker may be included without a speaker hole (e.g., a piezo speaker).

The sensor module 111 may generate electrical signals or data values corresponding to an internal operating state or an external environmental state of the wearable electronic device 100. The sensor module 111 may include, for example, a biometric sensor module 111 (e.g., an HRM sensor) disposed on the second surface 110B of the housing 110. The wearable electronic device 100 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The key input devices 102, 103, and 104 may include a wheel key 102 disposed on the first surface 110A of the housing 110 and configured to be rotatable in at least one direction, and/or side key buttons 103 and 104 disposed on the side surface 110C of the housing 110. The wheel key 102 may have a shape corresponding to the shape of the front surface plate 101. In another embodiment, the wearable electronic device 100 may not include some or all of the above-mentioned key input devices 102, 103, and 104, and a non-included key input device 102, 103, or 104 may be implemented in another form, such as a soft key on the display 220. The connector hole 109 may accommodate a connector (e.g., a USB connector) configured to transmit/receive power and/or data to/from an external wearable electronic device, and may include another connector hole (not illustrated) capable of accommodating a connector configured to transmit/receive an audio signal to/from an external wearable electronic device. The wearable electronic device 100 may further include, for example, a connector cover (not illustrated), which covers at least a portion of the connector hole 109 and blocks inflow of external foreign matter into the connector hole.

Each of the wearing members 150 and 160 may be detachably fastened to at least a portion of the housing 110 by using a locking member 151 or 161. The locking members 151 and 161 may include binding components such as pogo pins, and depending on an embodiment, the locking members may be replaced with protrusions or grooves provided on the wearing members 150 and 160. For example, the wearing members 150 and 160 may be coupled to the housing 110 by engaging with the grooves or protrusions provided on the housing 110. Each of the wearing members 150 and 160 may include at least one of a fixing member 152, a fixing member fastening hole 153, a band guide member 154, and a band fixing ring 155.

The fixing member 152 may be configured to fix the housing 110 and the wearing members 150 and 160 to a portion of the user's body (e.g., a wrist, an ankle, or the like). The fixing member fastening holes 153 allow the housing 110 and the wearing members 150 and 160 to be fixed to a portion of the user's body in cooperation with the fixing member 152. The band guide member 154 may be configured to limit the movement range of the fixing member 152 when the fixing member 152 is fastened to any of the fixing member fastening holes 153, thereby ensuring that the wearing members 150 and 160 are brought into close contact with and bound to a portion of the user's body. The band fixing ring 155 may limit the movement range of the wearing members 150 and 160 in the state in which the fixing member 152 and the fixing member fastening holes 153 are fastened to each other.

FIG. 3 is an exploded perspective view illustrating the wearable electronic device of FIG. 1.

Referring to FIG. 3, a wearable electronic device 100 may include a side surface bezel structure 212, a wheel key 230, a front surface plate 213 (e.g., the front surface plate 101 in FIG. 1), a display 220, a first antenna 250, a second antenna (e.g., an antenna included in a second circuit board 255), a support member 260 (e.g., a bracket), a battery 245, a printed circuit board 240, a sealing member 290, a rear surface plate 292, and a wearing member 201. At least one of the components of the wearable electronic device 100 may be the same as or similar to at least one of the components of the wearable electronic device 100 of FIG. 1 or FIG. 2, and a redundant description thereof will be omitted below. The support member 260 may be disposed inside the wearable electronic device 100 and connected to the side surface bezel structure 212, or may be integrally configured with the side surface bezel structure 212. The support member 260 may be made of, for example, a metal material and/or a non-metal (e.g., polymer) material. The support member 260 may include one surface to which the display 220 is coupled and the other surface to which the printed circuit board 240 is coupled. A processor, memory, and/or an interface may be mounted on the printed circuit board 240. The processor may include, for example, one or more of a central processing unit, an application processor, a graphics processing unit (GPU), an application processor sensor processor, or a communication processor.

The memory may include, for example, volatile memory or non-volatile memory. The interface may include, for example, a high-definition multimedia interface (HDMI), a universal serial bus (USB) interface, an SD card interface, and/or an audio interface. The interface may electrically or physically connect, for example, the wearable electronic device 100 to an external electronic device, and may include a USB connector, an SD card/MMC connector, or an audio connector.

The battery 245 is a device to supply power to at least one component of the wearable electronic device 100, and may include, for example, a non-rechargeable primary battery, a rechargeable secondary battery, or a fuel cell. At least a portion of the battery 245 may be disposed on substantially the same plane as, for example, the printed circuit board 240. The battery 245 may be integrally disposed inside the wearable electronic device 100, or may be disposed to be detachable from the wearable electronic device 100.

The first antenna 250 may be disposed between the display 220 and the support member 260. The first antenna 250 may include, for example, a near-field communication (NFC) antenna, a wireless charging antenna, and/or a magnetic secure transmission (MST) antenna. For example, the first antenna 250 may perform short-range communication with an external device, may wirelessly transmit/receive power required for charging, or may transmit a short-range communication signal or a magnet-based signal including payment data. In another embodiment, an antenna structure may be constituted with a portion of the side surface bezel structure 212 and/or a portion of the support member 260, or a combination thereof.

The second circuit board 255 may be disposed between the printed circuit board 240 and the rear surface plate 292. The second circuit board 255 may include, for example, a near-field communication (NFC) antenna, a wireless charging antenna, and/or a magnetic secure transmission (MST) antenna. For example, the second circuit board 255 may perform short-range communication with an external device, may wirelessly transmit/receive power required for charging, or may transmit a short-range communication signal or a magnet-based signal including payment data. In an embodiment, the antenna structure may be configured with a portion of the side surface bezel structure 212 and/or the rear surface plate 292 or a combination thereof. In various embodiments, when the wearable electronic device 100 (e.g., the wearable electronic device 100 in FIGS. 1 and 2) includes a sensor module (e.g., the sensor module 111 in FIG. 2), a sensor circuit disposed on the second circuit board 255 or a sensor element (e.g., a photoelectric conversion element or an electrode pad) separate from the second circuit board 255 may be disposed. For example, an electronic component provided as a sensor module 111 may be disposed between the printed circuit board 240 and the rear surface plate 292.

The sealing member 290 may be located between the side surface bezel structure 212 and the rear surface plate 292. The sealing member 290 may be configured to block moisture and foreign matter from flowing into the space surrounded by the side surface bezel structure 212 and the rear surface plate 292 from the exterior.

The wearing member 201 may be provided as a pair of wearing members 201a and 201b. For example, the pair of wearing members 201a and 201b may be connected to different areas of the side bezel structure 212 and may be arranged in symmetrical shapes.

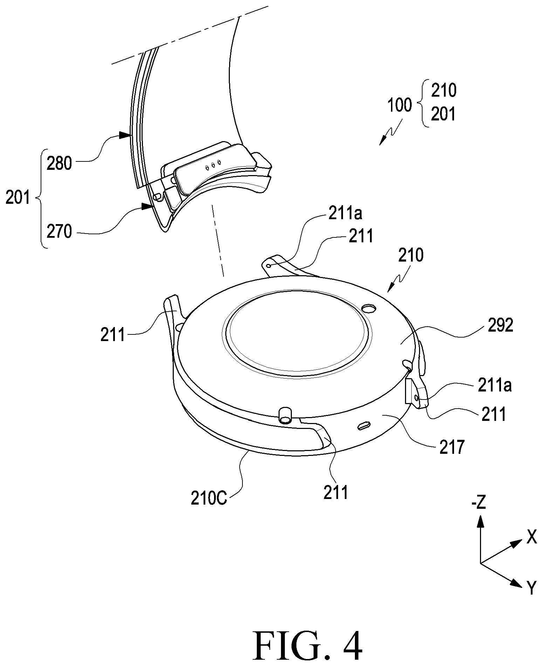

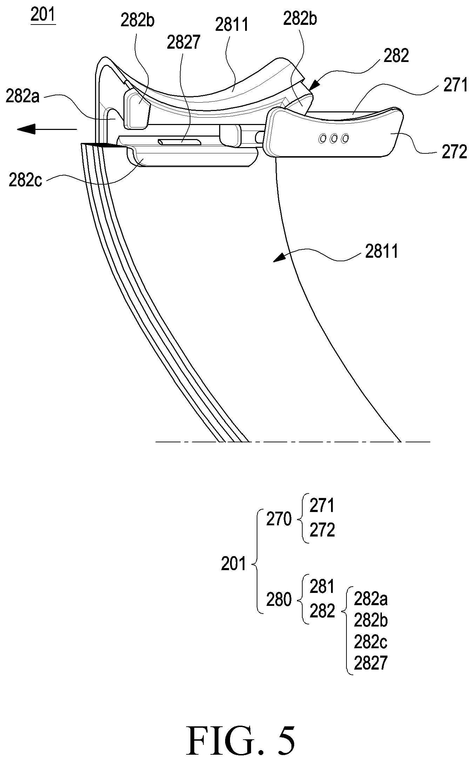

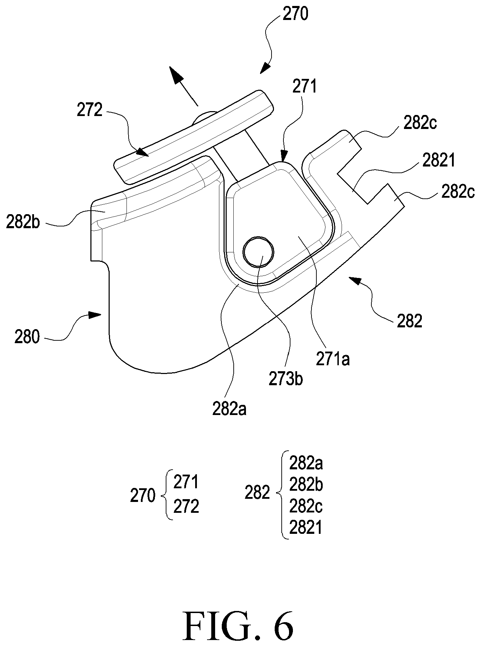

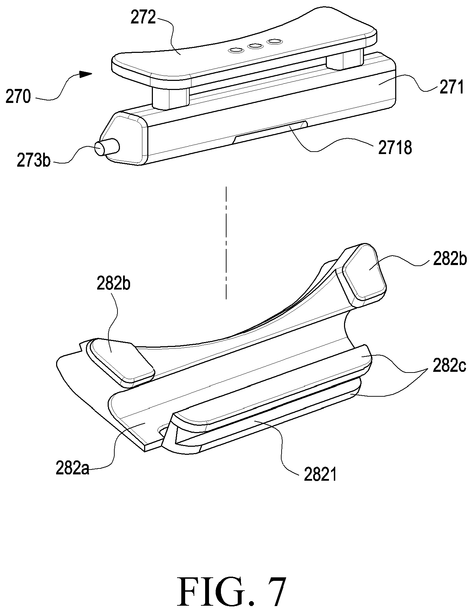

FIG. 4 is a perspective view of a wearing member according to an embodiment disclosed herein. FIG. 5 is a side view of a wearing member according to an embodiment disclosed herein. FIG. 6 is a perspective view of a link assembly and a cover member according to an embodiment disclosed herein. FIG. 7 is a perspective view illustrating a strap assembly according to an embodiment disclosed herein separated into a strap and a cover member.

The wearable electronic device 100 of FIG. 4 may be referred to as the wearable electronic device 100 of FIGS. 1 to 3. The configuration of the wearing member 201 of FIGS. 4 and 5 may be wholly or partially identical or similar to the configuration of the wearing members 150 and 160 of FIGS. 1 and 2 and/or the wearing member 201 of FIG. 3.

Referring to FIG. 4, the wearable electronic device 100 according to various embodiments disclosed herein may include a housing 210 (e.g., the housing 110 in FIGS. 1 and 2) and/or at least one wearing member 201. For example, the housing 210 may include a side surface bezel structure (e.g., the side surface bezel structure 212 in FIG. 3) defining the side surface 210C (e.g., 110C in FIGS. 1 and 2) and a rear surface plate (e.g., the rear surface plate 292 in FIG. 3). According to an embodiment, the wearing member 201 may be configured to detachably attach the housing 210 or the wearable electronic device 100 to the user's body (e.g., the wrist). In an embodiment, the wearing member 201 may be provided in multiple pieces (e.g., a pair). For example, a pair of wearable elements 201 may be respectively positioned symmetrically about the housing 210. For example, as described with reference to the wearable electronic device 100 of FIGS. 1 to 3, a user may wear the wearable electronic device 100 on the body by fastening the pair of wearable elements 201.

Referring to FIG. 4, in an embodiment, the housing 210 may include at least one seating area 217 to which the wearable element 201 is detachably connected According to an embodiment, the seating area 217 may be formed on a portion of the side surface 210C (e.g., a portion of the side surface 110C in FIGS. 1 and 2). For example, the seating area 217 may be a concave area formed on a portion of the side surface 210C of the housing 210 to accommodate a portion of the wearing member 201. For example, the seating area 217 may be formed in a shape that surrounds a portion of the wearing member 201. According to an embodiment, the seating area 217 and a portion of the wearing member 201 (e.g., the cover member 282 and the link assembly 270) may be provided in a shape in which the overlapping portions engage with each other. For example, referring to FIG. 4, the seating area 217 may refer to an area surrounded by multiple (e.g., a pair) of protrusions 211 (e.g., lugs) and a side surface 210C of the housing 210 located between the pair of protrusions 211. For example, the protrusions 211 may be provided as a pair spaced apart from each other on the side surface 210C of the housing 210. For example, multiple (e.g., a pair of) seating areas 217 may be provided, and may be positioned symmetrically about the housing 210. For example, the protrusions 211 of the seating areas 217 may be configured integrally with the housing 210 or may be coupled to the housing 210. For example, at least one of the pair of protrusions 211 of one seating area 217 may be coupled to the side surface 210C of the housing 210 as a single member with the closer protrusion 211 of the pair of protrusions 211 of the other seating area 217 disposed on the opposite side.

Referring to FIG. 4, according to an embodiment, the protrusions 211 may each include a first connection portion 211a that is connected to a portion of the wearing member 201 (e.g., the second connection portion 273b in FIG. 6) on the side wall in the first axial direction (e.g., the X-axis direction). For example, the first connection portion 211a may be a groove that is recessed from the surfaces facing each other on the side walls of the pair of protrusions 211. For example, the shape of the first connection portion 211a may be formed to correspond to the shape of the second connection portion 273b to accommodate the second connection portion 273b of the wearing member 201. However, the shapes and/or positions of the seating area 217 and the first connection portion 211a are not limited to those described above. As long as the seating area 217 and the first connection portion 211a have a structure that allows them to be detachably connected to the wearing member 201, the specific shapes and positions thereof may be variously changed and applied.

Referring to FIGS. 4 and 5, in an embodiment, the wearing member 201 may include a link assembly 270 and a strap assembly 280. According to an embodiment, the strap assembly 280 may include a strap 281 and/or a cover member 282. For example, the cover member 282 may be connected to each of the strap 281 and the link assembly 270.

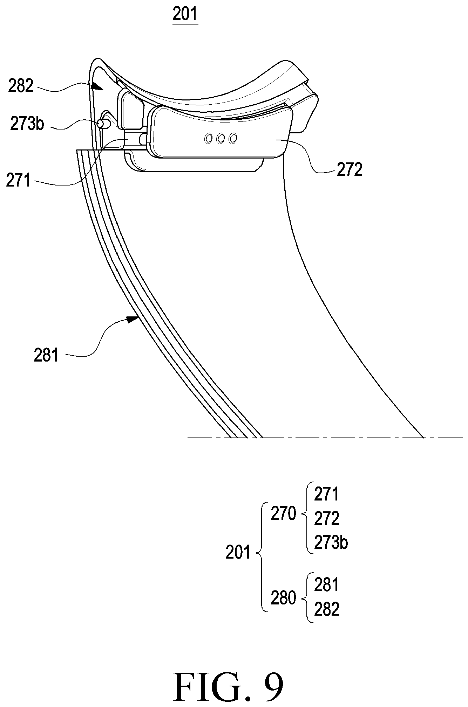

Referring to FIG. 4, in an embodiment, the link assembly 270 may include a main body 271, a button member 272, and a second connection portion 273b (e.g., the second connection portions 273b in FIGS. 9 to 12).

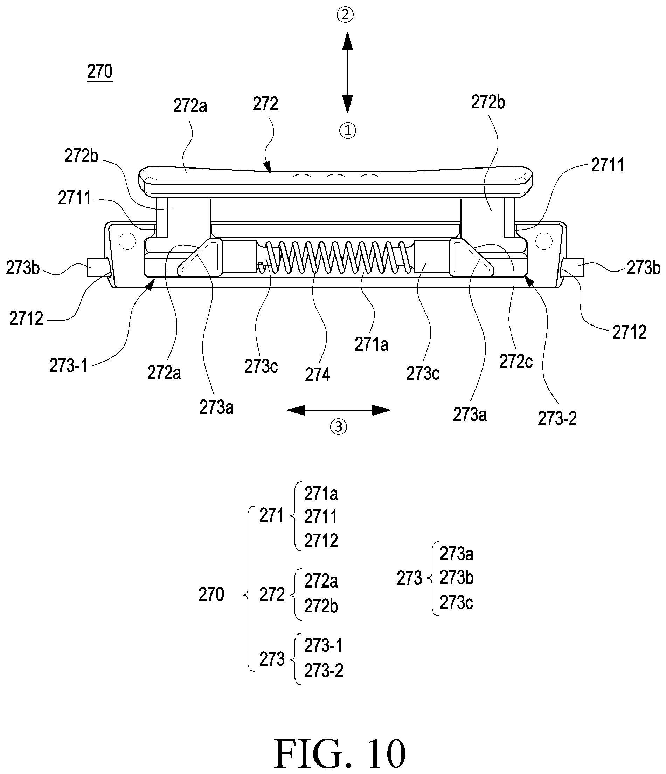

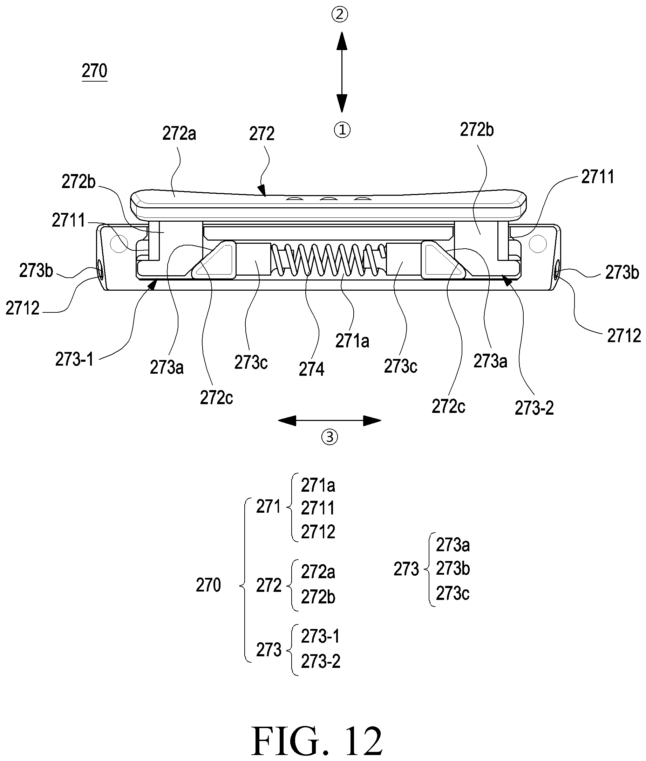

In this document, the term "external input" (e.g., pressure or touch) may refer to an action of a user pressing the button member 272. For example, a user may operate the link assembly 270 to engage with or disengage from the housing 210 by applying external input to the button member 272. According to an embodiment, the button member 272 may be operably connected in a first axial direction, and the second connection portion 273b may be operably connected to the main body in a second axial direction intersecting the first axial direction. In this document, the direction of movement of the button member 272 may be referred to as the first axial direction (e.g., the directions of arrows ① and ② of FIGS. 10 and 12). In addition, the direction of movement of the spring bar 273 due to the external input transmitted by the button member 272 and/or the elastic force of the spring member 274 may be referred to as **the second** axis direction (e.g., the direction of arrow ③ in FIGS. 10 and 12). The first axial direction and the second axial direction may intersect (e.g., be orthogonal to) each other. For example, the second axial direction may be substantially parallel to the X-axis direction. For example, the first axial direction may be substantially parallel to the Z-axis direction, which is a thickness direction of the wearable electronic device, depending on the position of the wearing member with respect to the wearable electronic device.

According to an embodiment, the main body 271 may include a pair of first side walls 271a, which respectively face one surfaces of the pair of protrusions 211 defining a seating area 217 in the housing 210. For example, the first side walls 271a may be opposite side walls in the second axial direction (e.g., the X-axis direction) in the main body 271.

According to an embodiment, the main body 271 may include openings (e.g., the second openings 2712 in FIGS. 10 and 12), in which the second connection portions 273b are received, respectively, in the first side walls 271a. According to an embodiment, for example, the second connection portions 273b may pass through the openings (e.g., the second openings 2712 in FIGS. 10 and 12) in the first side walls 271a to be at least partially exposed outside the first side walls 271a and may be coupled with the first connection portions 211a of the seating area 217. For example, the second connection portions 273b may pass through the openings (e.g., the second openings 2712 in FIGS. 10 and 12) in the first side walls 271a to be concealed inside the first side walls 271a and may be released from the first connection portions 211a of the seating area 217. For example, the first connection portions 211a and the second connection portions 273b may be in the form of concave portions and protrusions that engage with each other, or vice versa. By the operation of the second connection portions 273b described above, the link assembly 270 may be mounted to or separated from the seating area 217 of the housing 210.

Referring to FIGS. 5 to 8, in an embodiment, the cover member 282 may include a slide groove 282a, at least one guide portion 282b, and/or a strap cover portion 282c.

The cover member 282 according to an embodiment may include multiple surfaces, and herein, one surface of the cover member 282 on which the slide groove 282a and/or at least one guide portion 282b is formed may be referred to as a "first cover surface". Herein, one surface of the cover member 282 facing the first cover surface may be referred to as a "second cover surface". For example, the cover member 282 may include multiple side surfaces surrounding the space between the first cover surface and the second cover surface. Herein, among the multiple side surfaces, one side surface facing a portion of the seating area 217 with at least a portion of the strap extension 2811 of the strap 281 interposed therebetween, may be referred to as a "third cover surface".

According to an embodiment, the slide groove 282a may be configured to accommodate at least a portion of the link assembly 270. According to an embodiment, the slide groove 282a may be formed to allow the link assembly 270 accommodated inside thereof to be slid in the direction indicated by the arrow in FIG. 5 (e.g., in the second axial direction or the X-axis direction). According to an embodiment, the slide groove 282a may be formed through the cover member 282 in the second axial direction (e.g., in the X-axis direction). For example, the link assembly 270 may be slid in the second axial direction (e.g., the X-axis direction) to be introduced into or pulled out from a portion of the strap assembly 280 (e.g., the slide groove 282a). For example, the slide groove 282a may be formed in a shape in which the area overlapping the main body 271 of the link assembly 270 engages with the main body 271. For example, the slide groove 282a may be open in one direction. According to an embodiment, the slide groove 282a may include an open area formed on the first cover surface of the cover member 282. For example, the slide groove 282a may include a bottom surface facing the open area. For example, the button member 272 of the link assembly 270 may be disposed to protrude to the outside of the cover member 282 through the open area of the slide groove 282a.

According to an embodiment, the cover member 282 may include at least one guide portion 282b protruding on the first cover surface. According to an embodiment, the guide portion 282b may be disposed adjacent to an edge of the first cover surface, and may have a shape corresponding to the shape of the seating area 217. For example, multiple (e.g., a pair of) guide portions 282b may be provided. According to an embodiment, a pair of guide portions 282b may be spaced apart from each other in the second axial direction (e.g., the X-axis direction) on the first cover surface of the cover portion 282. A portion of the button member 272 (e.g., the input portion of FIGS. 9 to 12) may be disposed between the pair of guide portions 282b. For example, in the first state of a connection assembly in which the button member 272 is pressed, the input portion of the button portion 272 may be seated between the pair of guide portions 282b. For example, the pair of guide portions 282b may have a **shape that** engages with the input portion in the first state of the connection assembly. However, the shape and positions of the guide portions 282b are not limited to the above-described example and may be variously changed. **In** an embodiment (not illustrated), the guide portions 282b may protrude outward from the first cover surface of the cover member 282 and may at least partially overlap the rear surface plate of the housing 210.

The guide portions 282b according to an embodiment disclosed herein may guide the cover member 282 to be disposed in position within the seating area. For example, to mount the wearing member to the housing 210, it is necessary to accurately position the second connection portions 273b of the link assembly 270 at the first connection portions of the housing 210. According to an embodiment, when the cover member 282 engages with the seating area, the connection between the first connection portions and the second connection portions 273b is completed, thereby facilitating the process of mounting the wearing member to the housing 210. For example, the structure in which the guide portions 282b of the cover member 282 engage with the seating area of the housing 210 may suppress unnecessary rotation or displacement of the strap 281 within the seating area.

According to an embodiment, the strap cover portion 282c may be disposed on one surface of the cover member 282 that faces one end of the strap 281, and may extend from the one surface. For example, multiple (e.g., a pair of) strap cover portions 282c may be provided. According to an embodiment, a pair of strap cover portions 282c may be spaced apart from each other on one surface of the cover member 282 in the first axial direction (e.g., the Z-axis direction or the directions indicated by arrows ① and ② in FIG. 10). According to an embodiment, the pair of strap cover portions 282c may define a strap groove 2821 therebetween. For example, the strap groove 2821 may have a shape that engages with and accommodates a portion of one end of the strap 281. For example, the width of the strap groove 2821 may correspond to the thickness of the strap 281. However, the shape of the strap groove 2821 in the cover member 282 may be configured in various structures that engage with a portion of the strap 281, and is not limited to the aforementioned description.

Referring to FIGS. 5, 7, and 8, the cover member 282 may include a third connection portion 2827 in a portion of the slide groove 282a. According to an embodiment, the main body 271 of the link assembly 270 may include a fourth connection part 2718 provided at a position corresponding to the third connection part 2827. The third connection portion 2827 and the fourth connection portion 2718 may be configured to engage with each other. For example, the third connection portion 2827 may include a protrusion, while the fourth connection portion 2718 may include a recess that engages with the protrusion.

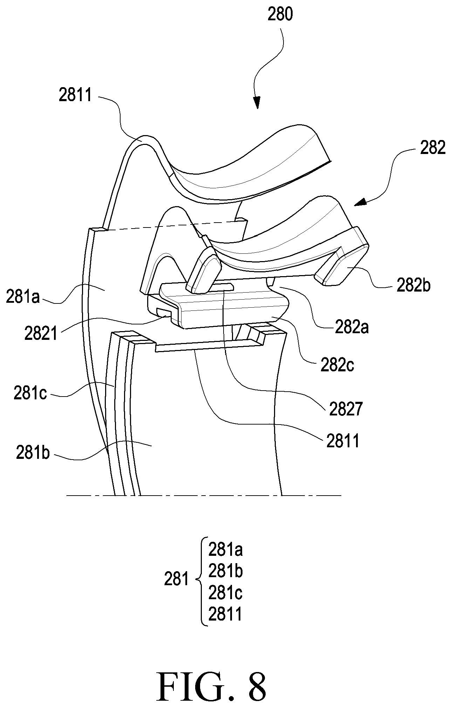

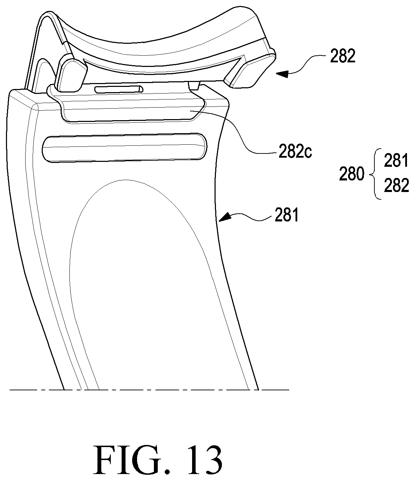

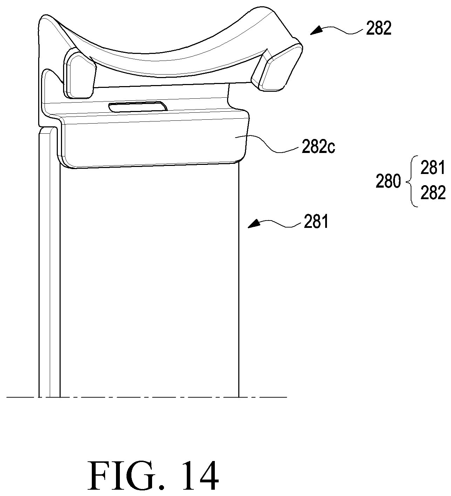

In an embodiment, the strap 281 of the strap assembly 280 may be coupled to the cover member 282. For example, referring to FIG. 6, the strap 281 may include a strap extension 2811 that wraps a portion of the cover member 282 and/or a cover engagement groove 2812 that engages with the strap groove 2821 of the cover member 282. **In** an embodiment, the strap 281 may include multiple (e.g., three) layers. For example, the strap 281 may include the strap extension 2811, and may include a first portion 281a forming the outer surface of the strap 281, and a second portion 281b forming the inner surface of the strap 281 opposite to the outer surface. For example, for the convenience of explanation, the strap extension 2811 may be distinguished from other portions of the first portion 281a by the dotted line indicated in FIG. 8, and the strap extension 2811 may be integrated with other areas of the first portion 281a. For example, the strap 281 may further include an intermediate member 281c disposed between the first portion 281a and the second portion 281b. For example, the intermediate member 281c may be a member that forms the thickness between the first portion 281a and the second portion 281b. In an embodiment (not illustrated), the intermediate member 281c may be enclosed by the first portion 281a and/or the second portion 281b in a manner that it is not exposed on the exterior of the strap 281, and depending on the embodiment, the intermediate member 281c may be omitted. In an embodiment (see, for example, FIGS. 13 and 14), the strap 281 may be formed as a single layer. In an embodiment, the cover member 282 and the strap 281 may be fixedly coupled to each other to form the strap assembly 280. In an embodiment (not illustrated), the cover member 282 and the strap 281 may be detachably coupled, allowing the strap 281 alone to be replaced on a single cover member 282 as needed, thereby forming a new combination of the strap assembly 280.

In an embodiment, the strap extension 2811 of the strap 281 may be coupled to the cover member 282 in a manner that partially wraps the outer surface of the cover member 282. In an embodiment, the strap extension 2811 may be formed to wrap the second cover surface of the cover member 282. According to an embodiment, the strap extension 2811 may be formed to wrap the second cover surface of the cover member 282 and further extend to wrap the third cover surface. According to an embodiment, at least a portion of the strap extension 2811 of the strap 281 may be disposed between a portion of the housing 210 (e.g., the seating area) and the cover member 282. For example, when a user wears the wearable electronic device by wrapping the strap 281 around the user's body (e.g., wrist), the second cover surface of the cover member 282 may be concealed by the strap extension 2811 of the strap 281 and may not be exposed to the outside. This strap 281 may form an integrated appearance with the housing 210, compared to cases where the strap 281 does not include the strap extension 2811. For example, the first portion 281a, the second portion 281b, and/or the third portion constituting the strap 281 may extend in an axial direction (e.g., the length direction of the wearable electronic device 100 or the Y-axis direction) in parallel to each other. For example, at least the strap extension 2811 of the strap 281 may be formed of various flexible materials (e.g., fabric and leather).

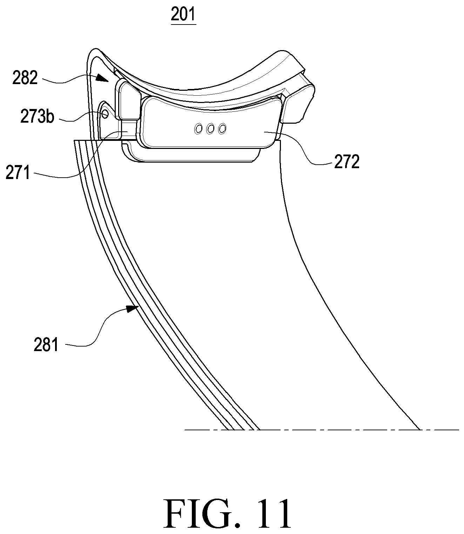

FIG. 9 is a perspective view illustrating the appearance of the wearing member according to an embodiment disclosed herein in a first state. FIG. 10 is a view of the link assembly of the wearing member of FIG. 9. FIG. 11 is a perspective view illustrating the appearance of the wearing member according to an embodiment disclosed herein in a second state. FIG. 12 is a view of the link assembly of the wearing member of FIG. 11.

The configuration of the wearing member 201 in FIGS. 9 and 11 may be wholly or partially identical or similar to the configuration of the wearing member 201 in FIGS. 4 and 5.

In an embodiment, the link assembly 270 may be variable between the first state (e.g., FIGS. 9 and 10), in which the button member 272 is not pressed and the second connection portions 273b protrude, and the second state (e.g., FIGS. 11 and 12), in which the button member 272 is pressed and the second connection portions 273b are concealed. According to an embodiment, the wearing member 201 may be mounted to or detached from the seating area 217 (e.g., the seating area 217 in FIG. 4) of the housing 210 (e.g., the housing 210 in FIG. 4) while maintaining the link assembly 270 in the second state.

Referring to FIGS. 10 and 12, in an embodiment, the link assembly 270 may include a main body 271, a button member 272, a spring bar 273, and/or a spring member 274.

According to an embodiment, the main body 271 may be formed in a shape corresponding to the guide hole in the cover member 282. According to an embodiment, the main body 271 may include an internal space 271a that at least partially accommodates the remaining components of the link assembly 270 (e.g., the button member 272, the spring bar 273, and/or the spring member 274). According to an embodiment, the main body 271 may include a first opening 2711 in a portion overlapping the button member 272, through which a portion of the button member 272 (e.g., the extension 272b) passes. For example, the first opening 2711 may be a hole formed in the first axial direction (e.g., the directions indicated by arrows ① and ②) through the side wall facing the button member 272. According to an embodiment, a second opening 2712 for accommodating the second connection portion 273b formed at one end of the spring bar 273 may be formed in a portion of the main body 271. For example, the second opening 2712 may be a hole formed through each of the side walls in the second axial direction (e.g., the direction indicated by arrow ③). For example, the first opening 2711 and the second opening 2712 may be connected to the internal space 271a of the main body 271, which accommodates a portion of the button member 272 (e.g., the extension 272b), the remaining portion of the spring bar 273, and the spring.

For example, a portion of the internal space 271a may be formed to guide the movement of the button member 272 in the first axial direction (e.g., the directions indicated by arrows ① and ②). Additionally, the spring bar 273 may be disposed within the internal space 271a of the main body 271 to be slidable in the second axial direction (e.g., the direction indicated by arrow ③). For example, a portion of the internal space 271a may be formed to guide the movement of the spring bar 273 in the second axial direction (e.g., the direction indicated by arrow ③).

In an embodiment, the button member 272 may include an input portion 272a protruding outward from the main body 271 and at least one extension 272b extending from the input portion 272a toward the interior of the main body 271. For example, the input portion 272a may receive external input (e.g., touch or pressing) such as a user's click action. In an embodiment, multiple (e.g., a pair of) extensions 272b may be provided. For example, a pair of extensions 272b may be included. For example, the pair of extensions 272b may be spaced apart from each other in the second axial direction (e.g., the direction indicated by arrow ③). For example, the input portion 272a may include at least one protrusion on its surface. For example, the at least one protrusion may assist the user in tactilely recognizing the button member 272.

According to an embodiment, the button member 272 may not be exposed externally in the state in which the wearable electronic device 100 is worn, for example, the state in which the user binds the wearing member 201 around a wearing area (e.g., wrist) such that the second portion 281b of the strap 281, which forms the inner surface of the strap, faces the wearing area. According to an embodiment, the button member 272 may be disposed such that the input portion is exposed on the first cover surface of the cover member 282 with respect to the main body 271. For example, the input portion may be disposed between the pair of guide portions 282b of the cover member 282.

According to an embodiment, the input portion 272a of the button member 272 may receive external input (e.g., touch or pressing force) and transmit it to the spring bar 273 disposed inside the main body 271. In an embodiment, the extension 272b of the button member 272 may include a first inclined surface 272c at the end facing the input portion 272a. For example, the first inclined surface 272c may come into contact with and engage with the second inclined surface 273a of the spring bar 273, thereby transmitting the external input to the spring bar 273. According to an embodiment, the first inclined surface 272c and the second inclined surface 273a may be configured to move the spring bar 273 in the second axial direction (e.g., the direction indicated by arrow ③) that intersects (e.g., orthogonal to) the first axial direction (e.g., the directions indicated by arrows ① and ②) in which the button member 272 moves. According to an embodiment, multiple (e.g., a pair of) extensions 272b may be provided. For example, respective first inclined surfaces 272c of the pair of extensions 272b may have symmetrical shapes with respect to the first axial direction (e.g., the directions indicated by arrows ① and ②). For example, the respective first inclined surfaces 272c of the pair of extensions 272b may be inclined to become farther away from each other in a first direction (e.g., the direction indicated by arrow ①) and closer to each other in a second direction (e.g., the direction indicated by arrow ②).

In an embodiment, multiple (e.g., a pair of) spring bars 273 may be provided, and the pair of spring bars 273 may include a first spring bar 273-1 and a second spring bar 273-2 that are spaced apart from each other. According to an embodiment, the first spring bar 273-1 and the second spring bar 273-2 may be spaced apart from each other with the spring member 274 interposed therebetween. According to an embodiment, portions of the first spring bar and the second spring bar 273-2 (e.g., the second inclined surfaces 273a) may respectively be connected to the pair of extensions 272b of the button member 272. In an embodiment, the spring bars 273 may extend in the second axial direction (e.g., the direction indicated by arrow ③).

In an embodiment, the first spring bar 273-1 and the second spring bar 273-2 may each include a first end and a second end 273c, which are opposite ends in the second axial direction (e.g., the direction indicated by arrow ③). According to an embodiment, the spring bar 273 may include a second connection portion 273b at a first end. For example, in the absence of external input through the button member 272, the second connection portions 273b of the spring bars 273 may protrude from the outer surface of the main body 271 due to the elastic force of the spring member 274. For example, the second connection portions 273b may be configured to engage with the first connection portions 211a provided in the seating area 217 (e.g., the seating area 217 in FIG. 4) of the housing 210 (e.g., the housing 210 in FIG. 4). For example, the second connection potions 273b may be pin-shaped elements capable of being accommodated in the first connection portions 211a, which are in the form of grooves.

According to an embodiment, the spring bars 273 may be connected to the spring member 274 via second ends 273c thereof. For example, the second ends 273c, which are opposite to the first ends of the spring bars 273, may come into contact with the spring member 274. For example, the second ends 273c may be at least partially accommodated within the spring member 274.

According to an embodiment, the spring bars 273 may include second inclined surfaces 273a, which engage with the first inclined surfaces 272c, respectively. For example, the first spring bar 273-1 and the second spring bar 273-2 may include respective second inclined surfaces 273a, which engage with the respective first inclined surfaces 272c of the pair of extensions 272b. For example, the respective second inclined surfaces 273a of the first spring bar 273-1 and the second spring bar 273-2 may be inclined to become farther away from each other in the first direction (e.g., the direction indicated by arrow ①) of the first axial directions and closer to each other in the second direction (e.g., the direction indicated by arrow ②).

In an embodiment, the spring member 274 may be disposed between the first spring bar 273-1 and the second spring bar 273-2. For example, the spring member 274 may be in a coiled form wound around the second axial direction (e.g., the direction indicated by arrow ③). According to an embodiment, the spring member 274 may be provided as a single component and may apply elastic force to the first connection portions 211a and the second connection portions 273b.

Hereinafter, the first and second states of the link assembly 270 will be described with reference to FIGS. 9 to 12.

According to an embodiment, in state in which the link assembly 270 is mounted in the seating area 217 of the housing 210, when in the first state (e.g., FIGS. 9 and 10), the second connection portions 273b may protrude outward from the main body 271 and engage with the first connection portions 211a. For example, in state in which the link assembly 270 is mounted in the seating area 217 of the housing 210, when in the second state (e.g., FIGS. 11 and 12), the second connection portions 273b may retract inward into the main body 271 and disengage from the first connection portions 211a. For example, in the second state (e.g., FIGS. 9 and 10), the wearing member 201 may be detached from the seating area 217.

Referring to FIGS. 9 to 12, when the button member 272 is displaced in the first direction (e.g., the direction indicated by arrow ①) due to external input, the spring bars 273 may move toward the spring member 274, and at this time, the first inclined surfaces 272c and the second inclined surfaces 273a may slide in contact with each other. The first spring bar 273-1 and the second spring bar 273-2 may move closer to each other in the second axial direction (e.g., the direction indicated by arrow ③). As a result, the respective second connection portions 273b of the first spring bar 273-1 and the second spring bar 273-2 may move inward into the main body 271. For example, the second state illustrated in FIGS. 11 and 12 may represent the state in which the button member 272 and the spring bars 273 are maximally displaced from the first state. In the first state, for example, the second connection portions 273b may not be exposed outside the main body 271. According to an embodiment, in the second state, the spring member 274 may be compressed by the first spring bar 273-1 and the second spring bar 273-2. For example, when the external input is removed in the second state, the link assembly 270 may return to the first state. For example, when the external input is removed, the first spring bar 273-1 and the second spring bar 273-2 may move farther away from each other in the second axial direction (e.g., the direction indicated by arrow ③) due to the elastic force of the spring member 274. The movement of the spring bars 273 may cause the button member 272 to move in the second direction (e.g., the direction indicated by arrow ②), and at this time, the first inclined surfaces 272c and the second inclined surfaces 273a may slide in contact with each other. In an embodiment (not illustrated), the button member 272 and/or the spring bars 273 may further include a stopper at a portion (e.g., the second axial end) of the first inclined surfaces 272c and/or the second inclined surfaces 273a to limit the movement of the button member 272 or the spring bars 273 within a specific range.

FIG. 13 is a perspective view of a strap assembly according to an embodiment disclosed herein. FIG. 14 is a perspective view of a strap assembly according to an embodiment disclosed herein.

The configuration of the strap assembly 280 in FIGS. 13 and 14 may be wholly or partially identical or similar to the configuration of the strap assembly 280 illustrated in FIGS. 9 and 11.

The strap assembly 280 in FIGS. 13 and 14 may be detachably connected to a link assembly 270 (e.g., the link assembly 270 illustrated in FIGS. 9 to 12), and may form a wearing member (e.g., the wearing member 201 illustrated in FIGS. 9 and 11) together with the link assembly. Hereinafter, the above descriptions regarding the cover member 282 (e.g., the strap 281 in FIGS. 9 and 11) and the strap 281 (e.g., the strap 281 in FIGS. 9 and 11) may be applied to the strap assembly 280 of FIGS. 13 and 14, and may not be repeatedly described below. With reference to FIGS. 13 and 14, the examples described later may be combined with at least some configurations of the examples described earlier with reference to FIGS. 4 to 12, as long as they are not technically mutually exclusive.

Referring to FIGS. 13 and 14, the strap 281 may be formed as a single component. In an embodiment, the cover member 282 illustrated in FIG. 13 may be applied to a strap 281 made of various flexible materials (e.g., molded bodies and rubber). For example, the rubber may include thermoplastic rubber (FKM).

Referring to FIG. 14, in an embodiment, the cover member 282 may include a strap cover portion 282c configured to overlap a portion of the strap 281. According to an embodiment, the strap cover portion 282c may be formed as a single component. For example, the strap cover portion 282c may extend to wrap a portion of one surface of the strap 281. According to an embodiment, a strap extension 2811 may be disposed to wrap a portion of the inner surface of the strap 281, which is opposite to the outer surface. For example, when a wearable electronic device (e.g., the wearable electronic device 100 of FIGS. 1 to 4) is worn by binding the wearing member 201 to the user's body (e.g., wrist), the strap extension 2811 may not be exposed to the outside. In an embodiment, the cover member 282 in FIG. 14 may be applied to a strap 281 including metal. For example, the strap 281 made of a metal material may include a mesh pattern.

A wearing member of a wearable electronic device may be typically detachably connected to a housing using a pin of a spring hinge bar provided in a link assembly. For example, the hinge bar may be operated by pressing a lever or button arranged in the link assembly. However, the lever or button is often small in size, making it difficult to operate easily. Furthermore, when the pressing direction of the lever or button intersects with the plane of the detaching direction of the wearing member, it is difficult to operate the lever or button with one hand. In general, the strap of the wearing member may be fixedly coupled to the link assembly, which has a disadvantage in that the link assembly should be purchased together in order to replace the strap.

The embodiments disclosed herein provide a wearing member configured to allow for detaching of a strap and a link assembly, and a wearable electronic device including the wearing member.

The embodiments disclosed herein provide a link assembly, in which the input portion of a button member has a large area to enhance the usability of the button member, and an input assembly detaching operation may be implemented through the simple operation of pulling the link assembly in the opposite direction of the housing while holding the link assembly to press the input portion. The embodiments also provide a wearable electronic device including the link assembly.

A wearable electronic device 100 according to an embodiment disclosed herein may include a housing 110 or 210 and a wearable member 201. The housing may have a concave seating area 217 on at least one side thereof. The wearable member 201 may include a link assembly 270 and a strap assembly 280, which are detachably mounted in the seating area 217. The strap assembly may be detachably connected to the link assembly. The strap assembly may include a cover member 282 and a strap 281 including a strap extension that wraps at least a portion of the cover member. The cover member may include a slide groove 282b formed through the cover member in an axial direction. The slide groove may be formed to allow the link assembly to be detachably seated on the slide groove by sliding in the axial direction. At least a portion of the strap extension may be disposed between the seating area and the link assembly.

A wearable electronic device 100 according to an embodiment disclosed herein may include a housing 110 or 210 and a wearable member 201. The housing may have a concave seating area 217 on at least one side thereof. The wearable member 201 may include a link assembly 270 and a strap assembly 280, which are detachably mounted in the seating area 217. The strap assembly may be detachably connected to the link assembly. The strap assembly may include a cover member 282 and a strap 281 including a strap extension 2811 that wraps at least a portion of the cover member. The cover member may include a slide groove 282b formed through the cover member in an axial direction (e.g., the X-axis direction or the direction of arrow ③ in FIGS. 10 and 12). The slide groove may be formed to allow the link assembly to be detachably seated on the slide groove by sliding in the axial direction. At least a portion of the strap extension may be disposed between the seating area and the link assembly.

In an embodiment, the cover member may include a first cover surface. The slide groove may include an open area formed through a portion of the first cover surface and extends in the axial direction.

In an embodiment, the link assembly 270 may include a main body 271 seated in the slide groove and a button member 272. The button member may include an input portion 272a, which is disposed outside the cover member. The button member may be configured to be movable in a first axial direction intersecting the axial direction with respect to the main body.

In an embodiment, the button member may further include an extension that connects the input portion and the main body and passes through the open area.

In an embodiment, the slide groove of the cover member may include a bottom surface facing the open area and a pair of side surfaces disposed between the bottom surface and the open area. At least one of the side surfaces may include side surfaces including a retracted area in at least a portion thereof.

In an embodiment, the main body may include a protruding area that engages with the retracted area. The link assembly may be formed to be non-detachable from the slide groove in the first axial direction while being mounted in the slide groove.

In an embodiment, the cover member may further include at least one guide portion 282b protruding on a portion of the one surface of the cover member. The guide portion may be formed in a form that engages with a portion of the seating area.

In an embodiment, the guide portion may be provided as a pair spaced apart from each other in the axial direction. The guide portions may not overlap the input portion.

In an embodiment, the seating area may include at least one first connection portion 211a on opposite side walls in the axial direction.

In an embodiment, the link assembly may further include first side walls 271a of the main body facing the two side walls, at least one second connection portion 273b, a pair of spring bars 273, and/or a spring member 274 disposed between the spring bars. The second connection portions may be disposed on the first side walls to engage with the first connection portion. The spring bars may be disposed within the main body and connected to a portion of the button member.

In an embodiment, the spring bars 273-1 and 273-2 may each include a first end and a second end 273c which are opposite ends in the axial direction. The first ends of the spring bars may face each other, and the second connection portions 273b may be formed at the first ends, respectively. The second ends of the spring bars may face each other and may each be connected to the spring member.

In an embodiment, the extension of the button member may include a first inclined surface 272c at an end facing the input portion.

In an embodiment, at least one of the spring bars may include a second inclined surface 273c that engages with the first inclined surface in a portion of the at least one of the spring bars.

In an embodiment, when the button member moves in the first axis direction, the pair of spring bars may move in a second axial direction that intersects the first axial direction and is parallel to the axial direction, and the second inclined surface may be slidable relative to the first inclined surface.

In an embodiment, the cover member may include a second cover surface facing the first cover surface. The strap extension may be formed to wrap at least a portion of the second cover surface.

In an embodiment, the cover member may include a third cover surface connecting the first cover surface and the second cover surface and facing a portion of the seating area. The strap extension may be formed to extend to wrap at least a portion of the third cover surface.

A wearable electronic device 100 according to an embodiment disclosed herein may include a housing 110 or 210 and a wearing member 201 detachable from the housing. The wearing member 201 may include a link assembly 270 and a strap assembly 280, which are configured to be seated in a portion of the housing. The strap assembly may be detachably connected to each of the housing and the strap assembly. The strap assembly may include a cover member 282 and a strap 281 including a strap extension 2811 that wraps at least a portion of the cover member. At least a portion of the strap extension may be disposed between the seating area and the link assembly. The cover member may include a slide groove 282b formed through the cover member in an axial direction. The slide groove may be formed to allow the link assembly to be detachably seated on the slide groove by sliding in the axial direction. The link assembly may include a main body 271 that is seated in the slide groove and a button member 272 that is configured to be movable in a first axial direction intersecting the axial direction with respect to the main body. The button member may include an input portion 272a, which is disposed outside the cover member.

In an embodiment, the cover member may include a first cover surface. The slide groove may include an open area formed through a portion of the first cover surface and extends in the axial direction.

In an embodiment, the button member may further include an extension 272b that connects the input portion and the main body and passes through the open area. The input portion may at least partially overlap the first cover surface.

In an embodiment, the slide groove of the cover member may include a bottom surface facing the open area and a pair of side surfaces disposed between the bottom surface and the open area. At least one of the side surfaces may include side surfaces including a retracted area in at least a portion of the at least one of the side surfaces .

In an embodiment, the main body may include a protruding area that engages with the retracted area. The link assembly may be formed to be non-detachable from the slide groove in the first axial direction while being mounted in the slide groove.

According to an embodiment of the wearable member disclosed herein, the design and/or material of the strap may be easily changed according to the purpose of use of the wearable electronic device and the user's preferences, thereby enhancing the usability of the wearable electronic device.

According to an embodiment of the wearable member disclosed herein, the design and/or material of the strap may be easily changed according to the purpose of use of the wearable electronic device and the user's preferences, thereby enhancing the usability of the wearable electronic device.

The effects derived from the embodiments disclosed herein are not limited to the above-described effects, and may be variously expanded within a scope that does not deviate from the spirit and scope disclosed herein.

The following description made with reference to the appended drawings may be provided in order to help comprehensive understanding of the various implementations of the disclosure defined by the claims and their equivalents. A specific embodiment disclosed in the following description includes various specific details to help understanding, but is considered to be one of various embodiments. Accordingly, it will be apparent to those skilled in the art that various changes and modifications of the various implementations described herein can be made without departing from the scope and spirit of the disclosure. In addition, descriptions of well-known functions and configurations may be omitted for clarity and brevity.

The terms and words used in the above description and the claims are not limited to a bibliographical meaning, but may be used to clearly and consistently describe the various embodiments disclosed herein. Accordingly, it will be apparent to those skilled in the art that the following description of various implementations of the disclosure is provided for illustrative purposes and not intended to limit the scope of the disclosure and its equivalents.

Unless the context clearly indicates otherwise, it should be understood that singular forms, including "a", "an", and "the", also encompass plural meanings. Accordingly, for example, the term "component surface" may refer to one or more surfaces of a component.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device 101). For example, a processor (e.g., the processor) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (100) comprising:
a housing (110, 210) comprising a concave seating area (217) provided on at least one side of the housing; and
a wearing member (201) comprising a link assembly (270) detachably mounted on the seating area (217) and a strap assembly (280) detachably connected to the link assembly,
wherein the strap assembly comprises:
a cover member (282) comprising a slide groove (282a) formed through the cover member in an axial direction, the slide groove being configured to allow the link assembly to be detachably seated on the slide groove by sliding in the axial direction; and
a strap (281) comprising a strap extension (2811) that wraps at least a portion of the cover member, and
wherein at least a portion of the strap extension is disposed between the seating area and the link assembly.

2. The wearable electronic device of claim 1, wherein the slide groove comprises an open area formed through a portion of a first cover surface of the cover member and extends in the axial direction.

3. The wearable electronic device of claim 2, wherein the link assembly comprises:
a main body (271) that is seated in the slide groove; and
a button member (272) that comprises an input portion (272a) disposed outside the cover member, the button member being configured to be movable in a first axial direction intersecting the axial direction with respect to the main body, and
wherein the input portion at least partially overlaps the first cover surface.

4. The wearable electronic device of claim 3, wherein the button member further comprises an extension (272b) that connects the input portion and the main body and passes through the open area.

5. The wearable electronic device according to claim 3 or 4, wherein the slide groove of the cover member comprises:
a bottom surface facing the open area; and
a pair of side surfaces disposed between the bottom surface and the open area, at least one of the side surfaces comprising a retracted area in at least a portion of the at least one of the side surfaces.

6. The wearable electronic device of claim 5, wherein the main body comprises a protruding area that engages with the retracted area, and
wherein the link assembly is formed to be non-detachable from the slide groove in the first axial direction while being mounted in the slide groove.

7. The wearable electronic device of one of claims 3 to 6, wherein the cover member further comprises at least one guide portion (282b) protruding on a portion of a surface of the cover member, and
wherein the guide portion is configured to engage with a portion of the seating area.

8. The wearable electronic device of claim 7, wherein the guide portion is provided as a pair spaced apart from each other in the axial direction and does not overlap the input portion.

9. The wearable electronic device of one of claims 3 to 8, wherein the seating area comprises at least one first connection portion (211a) on opposite side walls in the axial direction, and
wherein the link assembly comprises:
first side walls (271a) of the main body facing the two side walls;
at least one second connection portion (273b) disposed on the first side walls and formed to engage with the first connection portion;
a pair of spring bars (273) disposed inside the main body and connected to a portion of the button member; and
a spring member (274) disposed between the spring bars.

10. The wearable electronic device of claim 9, wherein the spring bars (273-1, 273-2) each comprise a first end and a second end (273c) which are opposite ends in the axial direction,
wherein the first ends of the spring bars face each other, and the second connection portions (273b) are provided at the first ends, respectively, and
wherein the second ends of the spring bars face each other and are each connected to the spring member.

11. The wearable electronic device according to claim 9 or 10, wherein the button member further comprises an extension (272b) that connects the input portion and the main body and passes through the open area, and wherein the extension of the button member comprises a first inclined surface (272c) at an end facing the input portion.

12. The wearable electronic device of claim 11, wherein at least one of the spring bars comprises a second inclined surface (273c) that engages with the first inclined surface in a portion of the at least one of the spring bars.

13. The wearable electronic device of claim 12, wherein, when the button member moves in the first axis direction, the pair of spring bars is configured to move in a second axial direction that intersects the first axial direction and is parallel to the axial direction, and the second inclined surface is configured to slide relative to the first inclined surface.

14. The wearable electronic device of claim 2, wherein the cover member comprises a second cover surface facing the first cover surface, and
wherein the strap extension is provided to wrap at least a portion of the second cover surface.

15. The wearable electronic device of one of claims 2 to 14, wherein the cover member comprises a third cover surface connecting the first cover surface and the second cover surface and facing a portion of the seating area, and
wherein the strap extension extends to wrap at least a portion of the third cover surface.
